# EUROPÄISCHE PATENTSCHRIFT

(11) **EP 3 375 027 B1**
(45) Veröffentlichungstag und Bekanntmachung des Hinweises auf die Patenterteilung: **20.03.2019**
(21) Anmeldenummer: 16791419.1
(22) Anmeldetag: 08.11.2016
(51) Int. Cl.: H01M 4/04, H01M 4/38, H01M 4/58, H01M 10/052

(54) **VERFAHREN ZUR HERSTELLUNG EINER ANODE FÜR EINE LITHIUM-SEKUNDÄRBATTERIE, HERGESTELLTE ANODE, LITHIUM-SEKUNDÄRBATTERIE ENTHALTEND DIE ANODE UND VERWENDUNGEN HIERVON**
PROCESS FOR THE PRODUCTION OF AN ANODE FOR A LITHIUM SECONDARY BATTERY, THE ANODE, A LITHIUM SECONDARY BATTERY COMPRISING THE ANODE AND USES THEREOF.
PROCEDE DE PRODUCTION D 'UNE ANODE POUR UNE BATTERIE SECONDAIRE AU LITHIUM, L' ANODE, UNE BATTERIE SECONDAIRE AU LITHIUM COMPRENANT L 'ANODE ET SES UTILISATIONS

(30) Priorität: 10.11.2015 DE 102015222048
(43) Veröffentlichungstag der Anmeldung: 19.09.2018
(73) Patentinhaber: Fraunhofer-Gesellschaft zur Förderung der angewandten Forschung e.V., 80686 München (DE); Technische Universität Dresden, 01069 Dresden (DE)
(72) Erfinder: PIWKO, Markus, 04603 Windischleuba (DE); HÄRTEL, Paul, 01099 Dresden (DE); ALTHUES, Holger, 01309 Dresden (DE); KASKEL, Stefan, 01159 Dresden (DE)
(74) Vertreter: Pfenning, Meinig & Partner mbB
(86) Internationale Anmeldenummer: PCT/EP2016/076931
(87) Internationale Veröffentlichungsnummer: WO 2017/080978

(56) Entgegenhaltungen:
- DE-A1-102013 216 259
- US-A1- 2013 052 532
- US-A1- 2015 004 485
- DU, Z. ET AL.: "Improved electrochemical performance of nanostructured Si-based films modified by chemical etching", ELECTROCHIMICA ACTA, Bd. 74, 2012, Seiten 222-226, XP028509159, in der Anmeldung erwähnt

## Beschreibung

Erfindungsgemäß wird eine Anode für eine Lithium-Sekundärbatterie und ein Verfahren zu deren Herstellung bereitgestellt. Wird die Anode in einer Lithium-Sekundärbatterie verbaut bewirkt sie dort sowohl eine ausgezeichnete Flächenkapazität als auch eine ausgezeichnete Zyklenstabilität. Das Verfahren basiert darauf, gleichmäßig verteilt auf einem Substrats mit einer Ausdehnung über eine bestimmte geometrische Fläche nur auf einem Teil der geometrischen Fläche eine columnare Schicht aus Silizium anzuordnen, wobei die columnare Schicht mindestens eine Schichthöhe von 1 µm aufweist. Der restliche Teil der geometrischen Fläche des Substrats bleibt als Freiraum für die Lithiierungs-bedingte Ausdehnung der columnaren Schicht während dem Betrieb der Lithium-Sekundärbatterie, wodurch hierbei mechanische Ausdehnungsspannungen vermieden werden und die Langzeitstabilität (Zyklenstabilität) der Batterie verbessert wird.

Es ist bekannt, dass durch den Einsatz von Silizium (3579 mAh/g) als Anodenmaterial in Lithium-Sekundärbatterien die geringe gravimetrische Kapazität der herkömmlichen Graphitanoden (372 mAh/g) gesteigert und dadurch die Energiedichte der Zelle erhöht werden kann. Im Vergleich mit Anoden aus reinem Lithiummetall (3862 mAh/g) tritt bei Siliciumanoden keine Dendritenbildung auf. Dadurch kann der Verlust an Aktivmaterial verringert und die Gefahr des Zellversagens durch Kurzschluss zwischen Anode und Kathode über Lithiumdendriten vermieden werden.

Aufgrund der hohen Volumenausdehnung von Silizium bei der Lithiierung (ca. 300 bis 400 %) kommt es zu einer starken mechanischen Belastung der Anoden. Daraus kann beispielweise ein partieller oder totaler Verlust des elektrischen Kontakts des Siliziums zum Stromkollektor resultieren, was zu einer Verringerung der Kapazität der Elektrode führt. Außerdem ist eine Deformation der Elektrode durch die Lithiierung des Siliziums möglich. Die Folge kann die Deformation der gesamten Zelle oder die partielle Entnetzung des eingesetzten Elektrolyten von Anode oder Kathode sein.

Im Stand der Technik ist bekannt, nanostrukturierte Siliziummaterialien (Nanodrähte, Nanopartikel) in Verbindung mit porösen Kompositmaterialien (beispielsweise poröse Kohlenstoffstrukturen) als Anodenstrukturen einzusetzen. Dadurch wird die effektive Kapazität der Elektrode verringert.

Columnare Siliziumschichten (hergestellt über PVD-Verfahren) wurden in verschiedenen Veröffentlichungen als Anodenmaterialien in Lithium Sekundärbatterien untersucht und ein positiver Effekt auf die Zyklenstabilität durch die columnare Struktur nachgewiesen (siehe z.B. Du, Z. et al., 2012, Electrochimica Acta, vol. 74, p. 222-226). Es wurden jedoch hier lediglich Schichtdicken < 1 µm und nur eine geringe Flächenkapazität der Elektrode erreicht.

Im Stand der Technik konnte bisher bei einer Ausnutzung von 2000 mAh/g_{Si} eine Flächenkapazität von 2,0 mAh/cm² erzielt werden (siehe Farmakis, F. et al., 2015, Journal of Power Sources, vol. 293, p. 301-305). Die dabei auftretenden Deformationseffekte der Elektrode nach der Lithiierung wurden dabei jedoch nicht beschrieben.

Ganzflächige columnare Siliziumstrukturen können jedoch nur bei geringen Schichtdicken (< 1 µm) den Platz zur Volumenausdehnung bereitstellen. Folglich ist eine ausreichende Volumenausdehnung und damit Zyklenstabilität nur im Zusammenhang mit geringen Energiedichten möglich.

Die US 2013/0052532 A1 offenbart eine Elektrode für eine Batterie, die auf ihrer Oberfläche periodisch angeordnete, columnare Nanostrukturen aus Silizium aufweist.

Ausgehend hiervon war es die Aufgabe der vorliegenden Erfindung ein Verfahren zur Herstellung einer Anode für Lithium-Sekundärbatterien bereitzustellen, wobei die Anode sowohl eine möglichst hohe Flächenkapazität (d.h. Energiedichte) als auch eine möglichst hohe Langzeitstabilität (d.h. Zyklenstabilität) aufweist. Ferner soll nicht nur die Anode, sondern auch eine Lithium-Sekundärbatterie mit dieser Anode bereitgestellt werden.

Die Aufgabe wird gelöst durch die Anode gemäß Anspruch 1, die Lithium-Sekundärbatterie gemäß Anspruch 3, das Verfahren gemäß Anspruch 6 und die Verwendungen der Lithium-Sekundärbatterie gemäß Anspruch 15. Die abhängigen Ansprüche zeigen bevorzugte Ausführungsmerkmale auf.

Erfindungsgemäß wird ferner eine Anode für eine Lithium-Sekundärbatterie bereitgestellt. Die Anode enthält ein Substrat mit einer Ausdehnung über eine bestimmte geometrische Fläche, oder besteht daraus. Auf 45 % bis 70 % dieser Fläche ist eine columnare Schicht, die Silicium enthält oder daraus besteht und eine Schichthöhe von mindestens 1 µm aufweist, abgeschieden. Die Anode ist dadurch gekennzeichnet, dass die columnare Schicht eine Vielzahl von Bereichen ausbildet, die auf der geometrischen Fläche gleichmäßig verteilt sind.

Erfindungsgemäß wird unter der columnaren Schicht eine Schicht verstanden, die dicht gepackte und/oder zueinander beabstandete "Keulen" (engl. "columns") aus Silizium enthält oder daraus besteht. Unter "Keulen" (engl. "co lumns") aus Silizium werden keulenartige bzw. säulenartige Strukturen aus Silizium verstanden. Unter einer geometrischen Fläche des Substrats wird die Ausdehnung des Substrats über eine bestimmte Gesamtfläche verstanden, wobei die Oberfläche des Substrats kleiner oder gleich der Gesamtfläche sein kann (d.h. das Substrat kann auch ein Gitter sein, dessen Oberfläche kleiner ist als die geometrische Flächenausdehnung des Gitters).

Die erfindungsgemäße Anode weist die folgenden Vorteile gegenüber bekannten Anoden auf:
- eine sehr hohe Energiedichte bei gleichzeitig geringer Lithiierungsbedingter Deformation während dem Betrieb;
- eine hohe Langlebigkeit aufgrund der geringeren mechanischen Beanspruchung durch die Lithiierung während dem Betrieb;
- eine Lithium-Sekundärbatterie mit der erfindungsgemäßen Anode ist langzeitstabil und sicher (gegenüber systembedingter Zerstörung); und
- eine Lithium-Sekundärbatterie mit der erfindungsgemäßen Anode benötigt nur geringe Mengen an Elektrolyt, da die Elektrode keine Deformationsbedingten porösen Bereiche aufweist, wodurch die Energiedichte höher ausfällt.

Die Anode kann dadurch gekennzeichnet sein, dass die columnare Schicht im Wesentlichen amorphes Silicium und/oder kristallines Silizium enthält oder daraus besteht. Bevorzugt enthält die columnare Schicht im Wesentlichen amorphes Silizium oder besteht daraus. Die Anode kann ferner lithiiert sein. Folglich kann die columnare Schicht auch Lithium enthalten.

Erfindungsgemäß ist die erfindungsgemäße Anode nach dem erfindungsgemäßen Verfahren (siehe weiter unten) herstellbar. Die erfindungsgemäße Anode weist daher alle Eigenschaften auf, die durch das erfindungsgemäße Herstellungsverfahren bedingt sind.

Desweiteren wird eine Lithium-Sekundärbatterie enthaltend eine erfindungsgemäße Anode bereitgestellt.

Die Lithium-Sekundärbatterie kann dadurch gekennzeichnet sein, dass die Lithium-Sekundärbatterie eine Lithiumionen-Sekundärbatterie ist. Bevorzugt enthält die Lithiumionen-Sekundärbatterie eine Kathode, die eine Lithiummetalloxidverbindung und/oder Lithiummetallphosphatverbindung enthält oder daraus besteht, besonders bevorzugt eine Kathode, die LiFePO₄, LiCoO₂, LiNiO₂, LiNi₁₋ₓCOₓO₂ mit x = 0-1, LiNi_{0,85}Co_{0,1}Al_{0,05}O₂, LiNi_{0,33}Co_{0,33}Mn_{0,33}O₂ und/oder LiMn₂O₄ enthält oder daraus besteht.

Ferner kann die Lithium-Sekundärbatterie dadurch gekennzeichnet sein, dass die Lithium-Sekundärbatterie eine Lithium-Schwefel-Batterie ist, die bevorzugt
a) die Anode im lithiierten Zustand; und/oder
b) eine Kathode enthaltend oder bestehend aus Kohlenstoff, Schwefel, ein Polysulfid und/oder ein Lithiummetallsulfid; und/oder
c) ein Additiv zur homogenisierten Verteilung von Polysulfid innerhalb der Kathode; und/oder
d) einen Separator, bevorzugt einen Separator enthaltend Polypropylen; und/oder
e) einen flüssigen oder festen Elektrolyten geeignet zum Lithiumionentransport, bevorzugt einen Elektrolyt enthaltend 50 vol.-% DME und/oder 50 vol.-% DOL, wobei der Elektrolyt optional LiTFSI und/oder LiNO₃ enthält, insbesondere 1 M LiTFSI und/oder 0,25 M LiNO₃ enthält;
enthält oder daraus besteht.

Erfindungsgemäß wird ferner ein Verfahren zur Herstellung einer Anode für eine Lithium-Sekundärbatterie bereitgestellt. Das Verfahren umfasst die Schritte
a) Abscheiden von Silizium auf einem Substrat mit einer Ausdehnung über eine bestimmte geometrische Fläche, wobei Silizium auf 45 % bis 70 % der Fläche abgeschieden wird und dabei eine columnare Schicht entsteht, die Silicium enthält oder daraus besteht und eine Schichthöhe von mindestens 1 µm aufweist (sog. "bottom-up"-Verfahren); oder
b) Abscheiden von Silizium auf einem Substrat mit einer Ausdehnung über eine bestimmte geometrische Fläche, wobei Silizium auf mehr als 40 % bis 90 % der Fläche abgeschieden wird und dabei eine columnare Schicht entsteht, die Silicium enthält oder daraus besteht, und anschließendes Entfernen eines Teils der columnaren Schicht von der Fläche, sodass die columnare Schicht nur auf 45 % bis 70 % der Fläche verbleibt und eine Schichthöhe von mindestens 1 µm aufweist (sog. "top-down"-Verfahren),
dadurch gekennzeichnet, dass in Schritt a) die columnare Schicht so abgeschieden wird oder in Schritt b) ein Teil der columnaren Schicht so entfernt wird, dass die columnare Schicht nach Schritt a) oder Schritt b) eine Vielzahl von Bereichen ausbildet, die auf der geometrischen Fläche des Substrats gleichmäßig verteilt sind.

Die erfindungsgemäße Ausführungsform des erfindungsgemäßen Verfahrens ist dadurch gekennzeichnet, dass die columnaren Schichten in Schritt a) so abgeschieden werden oder in Schritt b) so abgetragen werden, dass 45 % bis 70 %, bevorzugt 50 bis 70 %, besonders bevorzugt 55 bis 70 %, der Fläche von den columnaren Schichten bedeckt ist. Diese Bereiche sind besonders vorteilhaft, da sie einen optimalen Kompromiss aus hoher Energiedichte und hoher Langzeitstabilität darstellen.

Das Verfahren kann so durchgeführt werden, dass die Siliziumbeladung auf der gesamten Fläche des Substrats von 0,25 bis 10 mg Si pro cm², bevorzugt 0,5 bis 4 mg Si pro cm², besonders bevorzugt 0,6 bis 2,5 mg Si pro cm², beträgt.

Die in dem Verfahren erzeugten Bereiche von columnaren Schichten können
a) eine Höhe von ≥ 2 µm, bevorzugt ≥ 3 µm, besonders bevorzugt ≥ 4 µm, ganz besonders bevorzugt ≥ 4 µm bis 100 µm, insbesondere ≥ 4 bis 95 µm, aufweisen; und/oder
b) in eine Richtung lateral zur Fläche, optional zudem in eine Richtung senkrecht zu dieser Richtung, eine Breite von ≥ 0,2 µm, bevorzugt 1 bis 1000 µm, besonders bevorzugt 5 bis 200 µm, insbesondere 10 µm bis 100 µm aufweisen; und/oder
c) jeweils voneinander einen Abstand von ≥ 2 µm, bevorzugt ≥ 3 µm, besonders bevorzugt ≥ 4 µm, insbesondere 5 µm bis 150 µm aufweisen.

Die Bereiche der columnaren Schicht weisen bevorzugt einzelne Keulen aus Silizium auf, wobei mindestens eine einzelne Keule (bevorzugt alle einzelnen Keulen jeweils) in eine Richtung lateral zur Fläche, optional zudem in eine Richtung senkrecht zu dieser Richtung, eine Breite von ≥ 0,2 µm, bevorzugt 0,3 bis 90 µm, stärker bevorzugt 0,5 bis 9 µm, besonders bevorzugt 1 µm bis 4 µm, aufweisen.

Die in dieser Patentanmeldung angegebenen Werte für bestimmte Längen (z.B. die Breite, die Höhe und der Abstand der Bereiche columnarer Schichten bzw. einzelner Säulenstrukturen) werden bevorzugt über elektronenmikroskopische Aufnahmen bestimmt.

Die Bereiche der columnaren Schicht können als linienförmige Schichten auf der Fläche des Substrats ausgebildet werden, wobei die linienförmige Schichten bevorzugt zumindest bereichsweise als gerade, wellenförmige und/oder kreisförmige Linien ausgebildet werden, besonders bevorzugt als parallele gerade Linien, parallele wellenförmige Linien und/oder konzentrische kreisförmige Linien ausgebildet werden, insbesondere als ein Gitternetz aus parallelen geraden Linien und/oder parallelen wellenförmigen Linien ausgebildet werden.

Das Substrat kann ein elektrisch leitfähiges Material enthalten oder daraus bestehen, bevorzugt ein Metall, eine Metalllegierung und/oder Kohlenstoff enthalten oder daraus bestehen, bevorzugt Kupfer, Edelstahl, Nickel, Aluminium, Titan und/oder Graphit enthalten oder daraus bestehen.

Ferner kann das Substrat
a) als durchgehendes flächiges Substrat ausgestaltet sein; oder
b) als flächiges Substrat mit Aussparungen, bevorzugt durchgehenden Aussparungen, ausgestaltet sein; oder
c) als flächiges Gitter ausgestaltet sein;
wobei das Substrat optional auf einem elektrisch isolierendem Substrat, bevorzugt einer elektrisch isolierenden Folie, aufgebracht ist.

In Schritt a) kann vor dem Abscheiden
a) die Fläche des Substrats zumindest bereichsweise mit einer Maske bedeckt werden; und/oder
b) das Substrat mit mindestens einer durchgehenden Aussparung versehen werden, bevorzugt einer linienförmigen und/oder kreisförmigen durchgehenden Aussparung; und/oder
c) auf dem Substrat eine Vielzahl an Nukleationskeimen abgeschieden werden, an denen die Abscheidung begünstigt wird.

Im Fall b), in dem das Substrat teilweise entfernt wird, muss beachtet werden, dass noch eine elektrische Kontaktierung des Substrats (z.B. über eine Kontaktierung an dessen Rand) möglich ist.

In einer bevorzugten Ausführungsform erfolgt das Abscheiden der columnaren Schicht mit chemischer Gasphasenabscheidung und/oder physikalischer Gasphasenabscheidung, bevorzugt über Magnetron-Sputtering.

In Schritt b) des Verfahrens kann ein Teil der columnaren Schicht von der Fläche entfernt werden durch Ablation durch einen Laser, wobei der Laser
a) bevorzugt ein gepulster und/oder ungepulsten Laser, stärker bevorzugt ein gepulster Laser, besonders bevorzugt ein Femtosekundenlaser, Pikosekundenlaser, Nanosekundenlaser und/oder Mikrosekundenlaser, insbesondere Femtosekundenlaser und/oder Pikosekundenlaser, ist; und/oder
b) Licht einer Wellenlänge im UV-Bereich, VIS-Bereich und/oder IR-Bereich aussendet, bevorzugt Licht im VIS-Bereich; und/oder
c) mit einer Laserleistung von 1 mW bis 1 kW, bevorzugt 500 mW bis 100 W, besonders bevorzugt 1 W bis 50 W, betrieben wird; und/oder
d) mit einer Vorschubgeschwindigkeit von 0,1 mm/sek bis 10 m/sek, bevorzugt 1 mm/sek bis 1 m/sek, besonders bevorzugt 25 mm/sek bis 500 mm/sek, betrieben wird.

Das Verfahren kann dadurch gekennzeichnet sein, dass in Schritt b) ein Teil der columnaren Schicht von der Fläche entfernt wird durch zumindest bereichsweises Bedecken der Fläche des Substrats mit einer Maske, bevorzugt einer Maske enthaltend ein anorganisches Metallsalz oder bestehend daraus, und Durchführung eines Ätzschrittes, wobei der Ätzschritt bevorzugt umfasst
a) Ätzen mit einem Ätzgas, das bevorzugt Fluor F₂ und/oder NF₃ enthält oder daraus besteht, wobei das Ätzgas optional ein Trägergas, bevorzugt Stickstoff und/oder Argon, enthält;
b) Ätzen bei einem Druck von 0,1 mbar bis 2 bar, bevorzugt 1 mbar bis 100 mbar, besonders bevorzugt 5 mbar bis 10 mbar; und/oder
c) Ätzen bei einer Temperatur von 20 bis 500 °C, bevorzugt 200 bis 400 °C, besonders bevorzugt 250 bis 350 °C; und/oder
d) Ätzen über einen Zeitraum von 0,1 bis 20 Minuten, bevorzugt 0,5 bis 10 Minuten, besonders bevorzugt 1 bis 5 Minuten; und/oder
e) Ätzen durch Plasmaaktivierung des Ätzgases, bevorzugt durch Mikrowellenplasma.

Zudem wird vorgeschlagen, die erfindungsgemäßen Lithium-Sekundärbatterie als Energiequelle für ein Transportmittel, ein Gebäude und/oder ein Elektronikgerät zu verwenden.

In den nachfolgenden Figuren und Beispielen soll der erfindungsgemäße Gegenstand näher erläutert werden, ohne diesen auf die hier dargestellten spezifischen Ausführungsformen einschränken zu wollen.
Figur 1 zeigt eine REM-Aufnahme einer columnaren Struktur einer Schicht einer Referenz-Anode (Anode aus Beispiel 1) in der Draufsicht (Fig. 1A) und im Querschnitt (Fig. 1B).
Figur 2 zeigt die Leistungskurve einer Referenz-Lithium-Sekundärbatterie (Knopfzelle aus Beispiel 1).
Figur 3 zeigt eine REM-Aufnahme (Fig. 3A) und die elektrochemische Charakterisierung (Fig. 3B) der 1x zyklierten Zelle 1 aus Beispiel 1.2 (1x lithiiert, 1x delithiiert).
Figur 4 zeigt zeigt eine REM-Aufnahme (Fig. 4A) und die elektrochemische Charakterisierung (Fig. 4B) der Zelle 2 aus Beispiel 1.2 (nach pre-Lithiierung).
Figur 5 zeigt eine REM-Aufnahme einer columnaren Struktur einer Schicht einer erfindungsgemäßen Anode (Anode aus Beispiel 2) vor der Lithiierung in der Draufsicht in 500-facher (Fig. 5A) und 2000-facher (Fig. 5B) Vergrößerung.
Figur 6 zeigt eine REM-Aufnahme einer columnaren Struktur einer Schicht einer erfindungsgemäßen Anode (Anode aus Beispiel 2) nach der Lithiierung in der Draufsicht in 500-facher (Fig. 6A) und 2000-facher (Fig. 6B) Vergrößerung.
Figur 7 zeigt die Leistungskurve einer erfindungsgemäßen Lithium-Sekundärbatterie (Knopfzelle aus Beispiel 2).
Figur 8 zeigt eine Siliziumstruktur nach der Abscheidung gemäß Beispiel 3 vor (Fig. 8A) und nach dem Trockenätzen mit NF₃ (Fig. 8B).
Figur 9 zeigt das Ergebnis der elektrochemischen Charakterisierung der Zelle aus Beispiel 4.
Figur 10 zeigt das Ergebnis der elektrochemischen Charakterisierung der Zelle aus Beispiel 5.

### Beispiel 1: Herstellung und Charakterisierung einer Referenz-Anode und Referenz-Lithium-Sekundärbatterie

### 1. Herstellung einer Referenz-Anode (ganzflächiges columnares Si auf Kupfer)

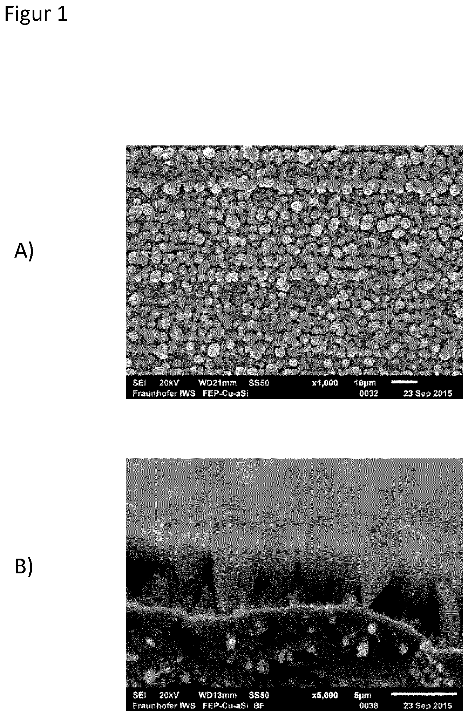

Substrat: Cu-Folie (Cu-SE58 10 µm - Hersteller: Schlenk GmbH). Magnetronsputtern mit Si. Die Struktur der Referenz-Anode wurde im REM analysiert (siehe Figur 1). Die Si-Schichtdicke beträgt ca. 4 µm. Die Si-Beladung beträgt ca. 1,0 mg Si/cm².

### 2. Herstellung und Charakterisierung einer Referenz-Lithium-Sekundärbatterie (Test in einer Li-Si-Halbzelle)

Die mit dem a-Si beschichtete Cu-Folie (= Elektrode) wurde in einer Knopfzelle (CR2016) verbaut.

Die Bestandteile der Knopfzelle waren:
- 12 mm Silicium beschichtete Cu-Folie (Elektrode);
- ein Separator (Celgard 2500, 19 mm Durchmesser);
- 250 µm Lithiumfolie (MTI Corp., 15 mm Durchmesser);
- 2x 500 µm V2A-Stahlabstandhalter (15,4 mm Durchmesser);
- 30 µl Elektrolyt mit 1 M LiTFSI (Aldrich, 99,95 %), 0,25 M LiNO₃ (Alfa Aesar, 99.98%, wasserfrei) in 50 Vol.-% DME (Sigma Aldrich, 99,5 %, wasserfrei) und 50 Vol.-% DOL (Aldrich, 99,8 %, wasserfrei);

Zwei dieser Knopfzellen wurden jeweils galvanostatisch nach folgendem Protokoll gemessen:
- Zyklierung (Ladung/Entladung) mit einem Strom von 0,1 mA/cm² im 1. Zyklus und in den anschließenden Zyklen mit 0,5 mA/cm²;
- Halten bei 10 mV bis Strom auf 0,1 mA/cm² abgesunken ist zwischen 1,0 V - 10 mV vs. Li/Li⁺

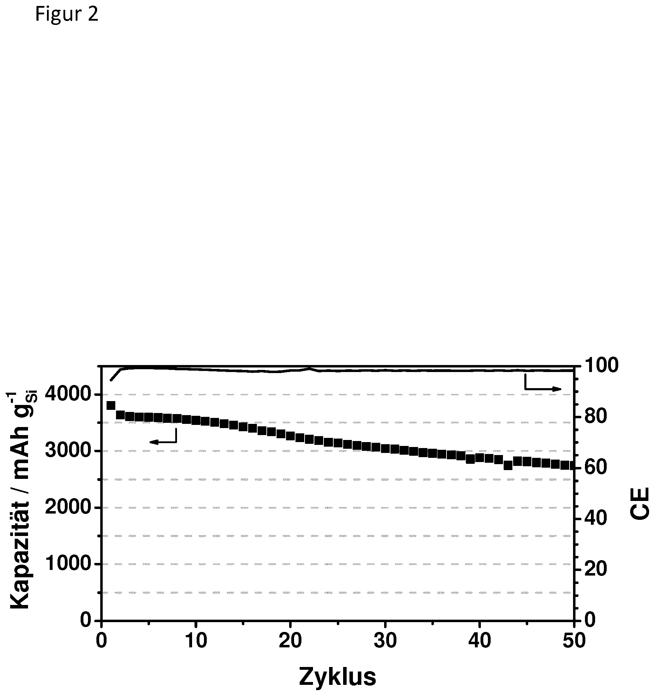

Das Ergebnis der galvanostatischen Messung ist in Figur 2 dargestellt.

Anschließend wurden die beiden Knopfzellen nach folgendem Protokoll gemessen:

### Zelle 1

1 x Zyklieren (Lithiieren und Delithiieren) bei 0,1 mA/cm² und 1 V - 10 mV.

### Zelle 2

1x Entladen mit 0,2 mA/cm²;
Laden mit 0,5 mA/cm²;
Zyklus mit 0,5 mA/cm²,
1x Entladen mit 0,5 mA/cm² 1V -10 mV.

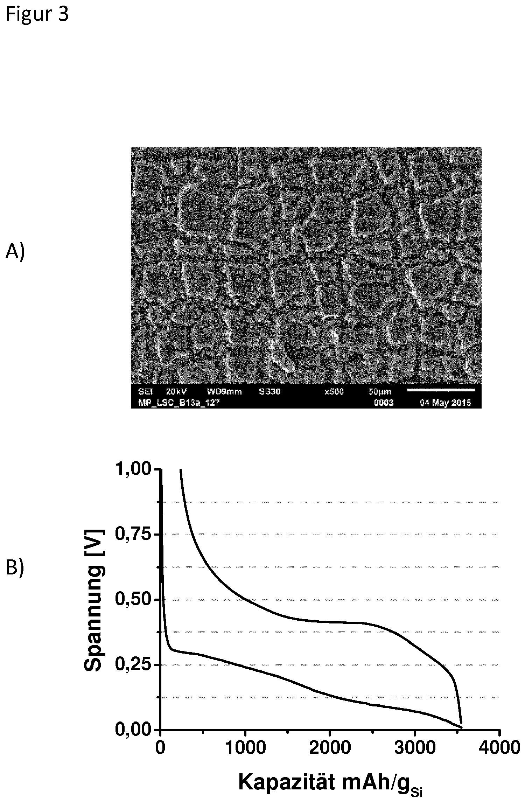

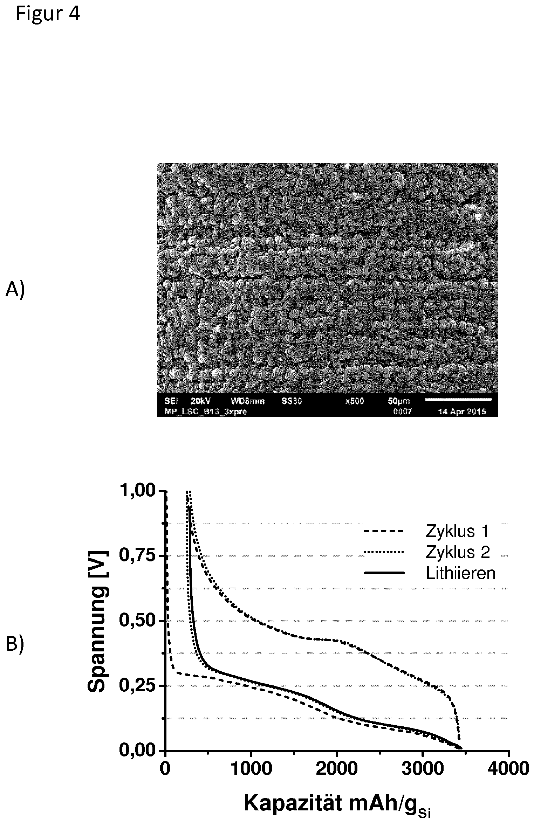

Die beiden Zellen wurden im REM und elektrochemisch analysiert (siehe Figuren 3 und 4). Es wurden folgende Ergebnisse erhalten:

### Eigenschaften Zelle 1

- Elektrode zeigt erste kleine Risse;
- Struktur aus Inseln von columnaren Si;
- Volumenausdehung des Si erzeugt Platz für Freiräume zwischen Inseln durch Biegen der Cu-Folie.

### Eigenschaften Zelle 2

- Elektrode zeigt größere Risse;
- Keine Inselstruktur mehr beobachtbar;
- Volumenausdehung des Si führt zum Füllen der Freiräume zwischen Inseln des columnaren Si.

### Beispiel 2: Herstellung und Charakterisierung einer erfindungsgenäßen Anode und erfindungsgemäßen Lithium-Sekundärbatterie

### 1. Herstellung einer erfindungsgemäßen Anode (gitterförmiges columnares Si auf Kupfer)

Si-Schichten wurden wie in Beispiel 1 erzeugt, aber mit einem gepulsten Laser die columnaren Schichten dergestalt entfernt, dass auf dem elektrisch leitfähigen Substrat (Cu-Folie) eine Gitterstruktur aus columnaren Si-Schichten erzeugt wurde.

Laserparameter: Laser (λ = 532 nm), f = 200 kHz, Vorschubgeschwindigkeit v = 200 mm/s, FFP = 30%).

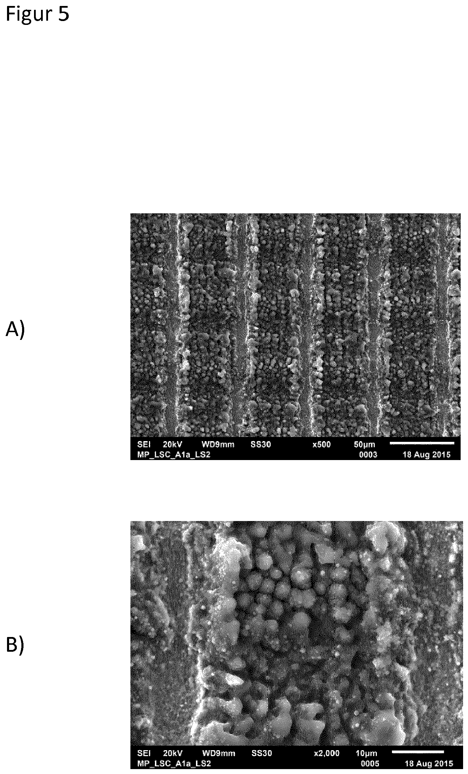

Die Struktur der erfindungsgemäßen Anode wurde im REM analysiert (siehe Figur 5).

Die strukturierte Schicht aus mehreren columnaren a-Si-Schichten weist eine gitterförmige Struktur auf. Die Orientierung von Si ist vollständig entfernt, andere nur partiell abgetragen Strukturen innerhalb der Inseln sind etwas deformiert. Teile der columnaren Si-Strukturen sind erhalten. Durch den partiellen Abtrag von Silizium hat sich durch die entstandenen Freiräume auf dem elektrisch leitfähigen Substrat (Cu-Folie) die Siliziumbeladung auf 0,63 mg/cm² verringert.

### 2. Herstellung und Charakterisierung einer erfindungsgemäßen Lithium-Sekundärbatterie (Test in einer Li-Si-Halbzelle)

Die erfindungsgemäße Anode wurde wie in Beispiel 1 in einer Knopfzelle (CR2016) verbaut.

Die erfindungsgemäße Knopfzelle wurde galvanostatisch nach folgendem Protokoll gemessen:
1. Zyklierung (Ladung/Entladung) mit einem Strom von C/50 (bezogen auf 3579 mAhgₛᵢ) im 1. Zyklus und anschließend C/10 mA/cm²;
2. Halten bei 10 mV bis der Strom auf C/50 abgesunken ist zwischen 1,0 V - 10 mV vs. Li/Li⁺.

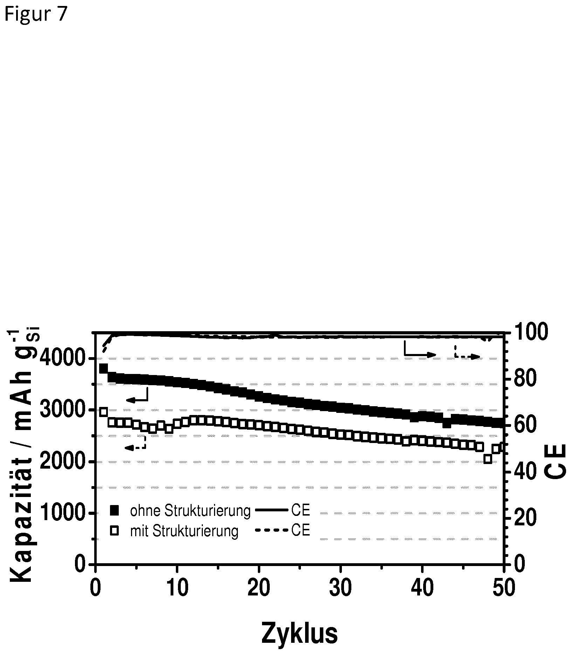

Das Ergebnis der galvanostatischen Messung ist in Figur 7 dargestellt.

Aus der REM-Aufnahme wird deutlich, dass die Strukturierung ausreichend Platz erzeugt hat für die Lithiierungs-bedingte Volumenausdehnung von Si. Es ist optisch keine Deformation der Elektrode erkennbar. In der REM-Aufnahme ist erkennbar, dass die Abstände zwischen Inseln aus kolumnaren Si im lithiierten Zustand verringert sind. Folglich tritt kein Riss in der Cu-Folie auf.

Zusätzlich wurde eine weitere erfindungsgemäße Knopfzelle nicht nach dem oben genannten galvanostatischen Protokoll gemessen, sondern nach folgendem Protokoll (= Protokoll gemäß Beispiel 1):
1. Zyklierung (Ladung/Entladung) mit einem Strom von 0,1 mA/cm² im 1. Zyklus und in den anschließenden Zyklen mit 0,5 mA/cm²;
2. Halten bei 10 mV bis Strom auf 0,1 mA/cm² abgesunken ist zwischen 1,0 V - 10 mV vs. Li/Li⁺

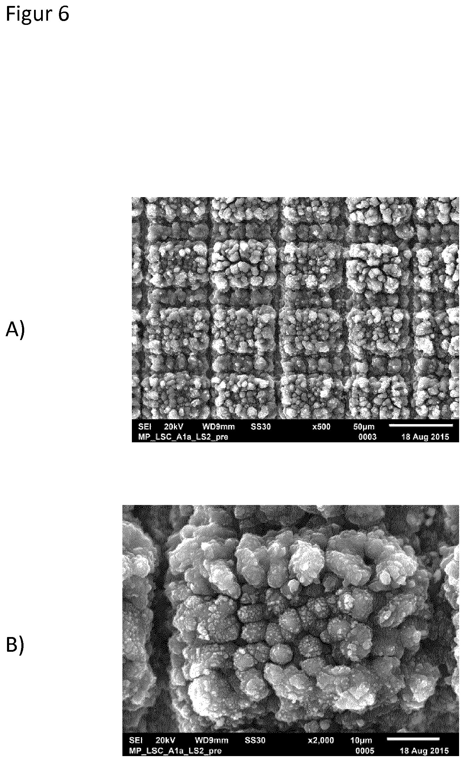

Die Zelle wurde nach dem Zyklieren lithiiert und anschließend geöffnet und optisch und im REM charakterisiert. Es war optisch kein Riss in der Cu-Folie erkennbar (siehe Figuren 5 bis 7).

### Beispiel 3: Herstellung und Charakterisierung einer erfindungsgenäßen Anode

Si-Schichten wurden wie in Beispiel 1 erzeugt. Mittels Trockenätzen durch Fluorgas wurde an den einzelnen columnaren Strukturen partiell Silizium abgetragen.

### Ätzparameter:

1. Plasmagestütztes Ätzen, Argon/NF₃-Gasgemisch (Verhältnis 8:3), Druck: 6 mbar, Gesamtprozesszeit: 15 min; Maskierung: anorganische Metallsalze, Auftragsmethode:
   a) NF₃-Ätzen: DC-Generator (Leistung: 100 W; Spannung: 20 V; Strom: 0,5 A; Mikrowelle 1 (rel. Leistung: 52 W); Mikrowelle 2 (rel. Leistung: 29 W); Zeitversatz: 60 %; Subtrattemperatur (Anfang: 20°C, Ende: 85°C), Zeit: 10 min;
   b) Argon-Plasma: Mikrowelle 1 (rel. Leistung: 25 Watt); Mikrowelle 2 (rel. Leistung: 25 Watt); Subtrattemperatur (Anfang: 85°C, Ende: 90°C), Zeit: 5 min.

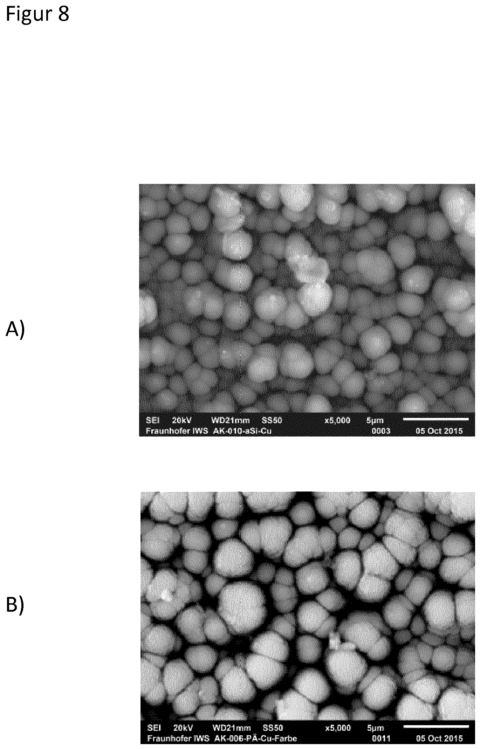

   Die Struktur der erfindungsgemäßen Anode wurde im REM analysiert (siehe Figur 8).
   Die strukturierte Schicht aus mehreren columnaren a-Si-Schichten weist Hohlräume zwischen den einzelnen Si-Keulen auf. Die einzelnen columnaren Si-Strukturen sind erhalten. Dadurch kann die Volumenausdehnung bei Lithiierung stattfinden, ohne dass sich die Elektrode makroskopisch deformiert. Durch den partiellen Abtrag von Silizium hat sich durch die entstandenen Freiräume auf dem elektrisch leitfähigen Substrat (Cu-Folie) die Siliziumbeladung verringert.
2. Fluortrockenätzen, N₂/F-Gasgemisch (0,9 % Vol-% F in N₂), Substrattemperatur: 300 °C, Zeitdauer: 1-5 min.

### Beispiel 4: Herstellung und Charakterisierung einer Lithium-Schwefel-Sekundärbatterie

Die erfindungsgemäße Anode wurde wie in Beispiel 2 in einer Knopfzelle (CR2016) gegen eine Kohlenstoff-Schwefel-Kompositkathode verbaut, nachdem sie wie in Beispiel 1 beschrieben lithiiert wurde.

Die Bestandteile waren:
- Durchmesser 12mm Kathode (Kohlenstoff-Schwefel-Komposit mit 65 % Schwefel und 2,1 mgS/cm²)
- 1 Separator (Celgard 3500, 19 mm Durchmesser);
- 2x 500 µm V2A-Stahlabstandhalter (15,4 mm Durchmesser).

In der Knopfzelle wurde ein Elektrolyt eingesetzt, der 1 M LiTFSI (Aldrich, 99,95 %) und 0,25 M LiNO₃ (Alfa Aesar, 99.98 %, wasserfrei) in 50 Vol.-% DME (Sigma Aldrich, 99,5 %, wasserfrei) und 50 Vol.-% DOL (Aldrich, 99,8 %, wasserfrei) enthält. Das Elektrolyt-zu-Schwefel-Verhältnis betrug 8 µl-Elektrolyt/mg-Schwefel.

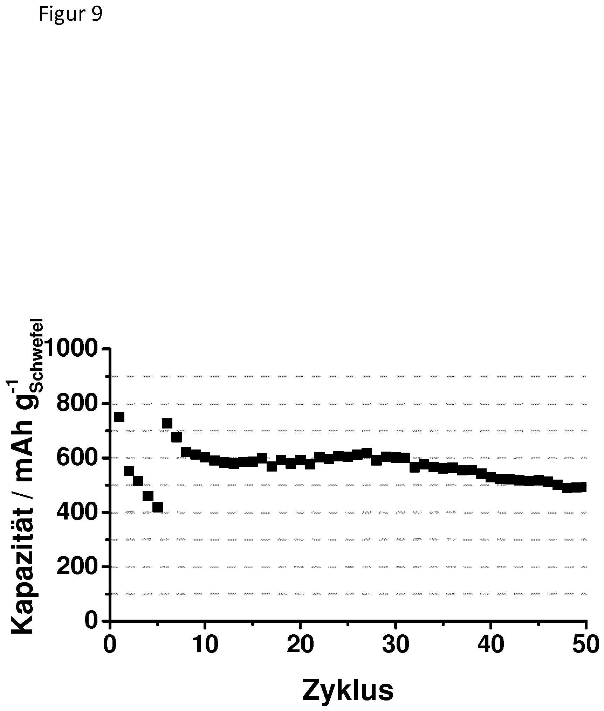

Die Zelle wurde anschließend galvanostatisch gemessen, wobei die Zyklierung (Ladung/Entladung) mit einer Rate von C/5 in den ersten 5 Zyklen zwischen 1.3-2,6 V, anschließend zwischen 1.0-2,6 V erfolgte. Das Ergebnis ist in Figur 9 dargestellt.

### Beispiel 5: Herstellung und Charakterisierung einer Lithium-Ionen-Sekundärbatterie

Die Referenz-Anode wurde wie in Beispiel 1 in einer Knopfzelle (CR2016) gegen eine NCA-Kompositkathode verbaut, nachdem sie wie in Beispiel 1 zykliert wurde. Die Bestandteile waren:
- Durchmesser 12mm Kathode (NCA-Kathode (bezogen von Firma: Customcells - High Energy Density NCA-Cathode) mit 90 % Aktivmaterial und 3,5 mAh/cm²)
- 1 Polyolefin-Separator (19 mm Durchmesser);
- 2x 500 µm V2A-Stahlabstandhalter (15,4 mm Durchmesser).

In der Knopfzelle wurde LP30 als Elektrolyt eingesetzt. Die Elektrolytmenge betrug 30 µl Elektrolyt.

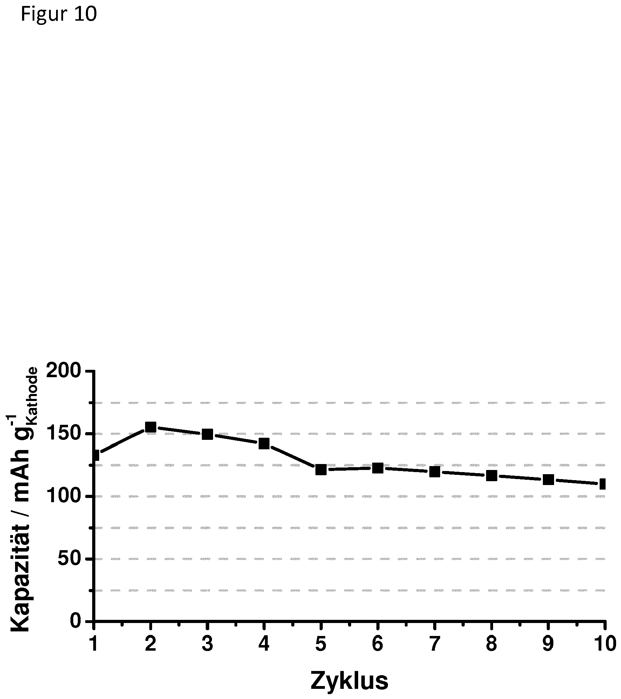

Die Zelle wurde anschließend galvanostatisch gemessen, wobei die Zyklierung (Ladung/Entladung) nach Standardformierung der Kathode mit 0,5 mA/cm² anschließend zwischen 2.5-4,3 V erfolgte. Das Ergebnis ist in Figur 10 dargestellt.

## Patentansprüche

1. Anode für eine Lithium-Sekundärbatterie, enthaltend ein Substrat mit einer Ausdehnung über eine bestimmte geometrische Fläche, oder bestehend daraus, wobei auf 45 % bis 70 % dieser Fläche eine columnare Schicht, die Silicium enthält oder daraus besteht und eine Schichthöhe von mindestens 1 µm aufweist, abgeschieden ist, **dadurch gekennzeichnet, dass** die columnare Schicht eine Vielzahl von Bereichen ausbildet, die auf der geometrischen Fläche gleichmäßig verteilt sind.

2. Anode gemäß Anspruch 1, **dadurch gekennzeichnet, dass** die columnare Schicht im Wesentlichen amorphes Silicium und/oder kristallines Silizium, optional auch Lithium, enthält oder daraus besteht.

3. Lithium-Sekundärbatterie enthaltend eine Anode gemäß einem der Ansprüche 1 bis 2.

4. Lithium-Sekundärbatterie gemäß Anspruch 3, **dadurch gekennzeichnet, dass** die Lithium-Sekundärbatterie eine Lithiumionen-Sekundärbatterie ist, die bevorzugt eine Kathode enthält, die eine Lithiummetalloxidverbindung und/oder Lithiummetallphosphatverbindung enthält oder daraus besteht, besonders bevorzugt eine Kathode, die LiFePO₄, LiCoO₂, LiNiO₂, LiNi₁₋ₓCoₓO₂ mit x = 0-1, LiNi_{0,85}Co_{0,1}Al_{0,05}O₂, LiNi_{0,33}Co_{0,33}Mn_{0,33}O₂ und/oder LiMn₂O₄ enthält oder daraus besteht.

5. Lithium-Sekundärbatterie gemäß Anspruch 3, **dadurch gekennzeichnet, dass** die Lithium-Sekundärbatterie eine Lithium-Schwefel-Batterie ist, die bevorzugt
a) die Anode im lithiierten Zustand; und/oder
b) eine Kathode enthaltend oder bestehend aus Kohlenstoff, Schwefel, ein Polysulfid und/oder ein Lithiummetallsulfid; und/oder
c) ein Additiv zur homogenisierten Verteilung von Polysulfid innerhalb der Kathode; und/oder
d) einen Separator, bevorzugt einen Separator enthaltend Polypropylen; und/oder
e) einen flüssigen oder festen Elektrolyten geeignet zum Lithiumionentransport, bevorzugt einen Elektrolyt enthaltend 50 vol.-% DME und/oder 50 vol.-% DOL, wobei der Elektrolyt optional LiTFSI und/oder LiNO₃ enthält, insbesondere 1 M LiTFSI und/oder 0,25 M LiNO₃ enthält;
enthält oder daraus besteht.

6. Verfahren zur Herstellung einer Anode für eine Lithium-Sekundärbatterie, umfassend die Schritte
a) Abscheiden von Silizium auf einem Substrat mit einer Ausdehnung über eine bestimmte geometrische Fläche, wobei Silizium auf 45 % bis 70 % der Fläche abgeschieden wird und dabei eine columnare Schicht entsteht, die Silicium enthält oder daraus besteht und eine Schichthöhe von mindestens 1 µm aufweist; oder
b) Abscheiden von Silizium auf einem Substrat mit einer Ausdehnung über eine bestimmte geometrische Fläche, wobei Silizium auf mehr als 40 % bis 90 % der Fläche abgeschieden wird und dabei eine columnare Schicht entsteht, die Silicium enthält oder daraus besteht, und anschließendes Entfernen eines Teils der columnaren Schicht von der Fläche, sodass die columnare Schicht nur auf 45 % bis 70 % der Fläche verbleibt und eine Schichthöhe von mindestens 1 µm aufweist,
**dadurch gekennzeichnet, dass** in Schritt a) die columnare Schicht so abgeschieden wird oder in Schritt b) ein Teil der columnaren Schicht so entfernt wird, dass die columnare Schicht nach Schritt a) oder Schritt b) eine Vielzahl von Bereichen ausbildet, die auf der geometrischen Fläche des Substrats gleichmäßig verteilt sind.

7. Verfahren gemäß Anspruch 6, **dadurch gekennzeichnet, dass** die columnaren Schichten in Schritt a) so abgeschieden werden oder in Schritt b) so abgetragen werden, dass
a) 50 bis 70 %, besonders bevorzugt 55 bis 70 %, der Fläche von den columnaren Schichten bedeckt ist; und/oder
b) die Siliziumbeladung auf der gesamten Fläche des Substrats von 0,25 bis 10 mg Si pro cm², bevorzugt 0,5 bis 4 mg Si pro cm², besonders bevorzugt 0,6 bis 2,5 mg Si pro cm², beträgt.

8. Verfahren gemäß einem der Ansprüche 6 oder 7, **dadurch gekennzeichnet, dass** die Bereiche der columnaren Schicht
a) eine Höhe von ≥ 2 µm, bevorzugt ≥ 3 µm, besonders bevorzugt ≥ 4 µm, ganz besonders bevorzugt ≥ 4 µm bis 100 µm, insbesondere ≥ 4 bis 95 µm, aufweisen; und/oder
b) in eine Richtung lateral zur Fläche, optional zudem in eine Richtung senkrecht zu dieser Richtung, eine Breite von ≥ 0,2 µm, bevorzugt 1 bis 1000 µm, besonders bevorzugt 5 bis 200 µm, insbesondere 10 µm bis 100 µm aufweisen; und/oder
c) jeweils voneinander einen Abstand von ≥ 2 µm, bevorzugt ≥ 3 µm, besonders bevorzugt ≥ 4 µm, insbesondere 5 µm bis 150 µm aufweisen; und/oder
d) einzelne Keulen aus Silizium aufweisen, wobei mindestens eine einzelne Keule, bevorzugt alle einzelnen Keulen jeweils, in eine Richtung lateral zur Fläche, optional zudem in eine Richtung senkrecht zu dieser Richtung, eine Breite von ≥ 0,2 µm, bevorzugt 0,3 bis 90 µm, stärker bevorzugt 0,5 bis 9 µm, besonders bevorzugt 1 µm bis 4 µm, aufweisen; und/oder
e) als linienförmige Schichten auf der Fläche ausgebildet werden, wobei die linienförmige Schichten bevorzugt zumindest bereichsweise als gerade, wellenförmige und/oder kreisförmige Linien ausgebildet werden, besonders bevorzugt als parallele gerade Linien, parallele wellenförmige Linien und/oder konzentrische kreisförmige Linien ausgebildet werden, insbesondere als ein Gitternetz aus parallelen geraden Linien und/oder parallelen wellenförmigen Linien ausgebildet werden.

9. Verfahren gemäß einem der Ansprüche 6 bis 8, **dadurch gekennzeichnet, dass** das Substrat ein elektrisch leitfähiges Material enthält oder daraus besteht, bevorzugt ein Metall, eine Metalllegierung und/oder Kohlenstoff enthält oder daraus besteht, bevorzugt Kupfer, Edelstahl, Nickel, Aluminium, Titan und/oder Graphit enthält oder daraus besteht.

10. Verfahren gemäß einem der Ansprüche 6 bis 9, **dadurch gekennzeichnet, dass** das Substrat
a) als durchgehendes flächiges Substrat ausgestaltet ist; oder
b) als flächiges Substrat mit Aussparungen, bevorzugt durchgehenden Aussparungen, ausgestaltet ist; oder
c) als flächiges Gitter ausgestaltet ist;
wobei das Substrat optional auf einem elektrisch isolierendem Substrat, bevorzugt einer elektrisch isolierenden Folie, aufgebracht ist.

11. Verfahren gemäß einem der Ansprüche 6 bis 10, **dadurch gekennzeichnet, dass** in Schritt a) vor dem Abscheiden
a) die Fläche des Substrats zumindest bereichsweise mit einer Maske bedeckt wird; und/oder
b) das Substrat mit mindestens einer durchgehenden Aussparung versehen wird, bevorzugt einer linienförmigen und/oder kreisförmigen durchgehenden Aussparung; und/oder
c) auf dem Substrat Nukleationskeime abgeschieden werden, an denen die Abscheidung begünstigt wird.

12. Verfahren gemäß einem der Ansprüche 6 bis 11, **dadurch gekennzeichnet, dass** das Abscheiden der columnaren Schicht mit chemischer Gasphasenabscheidung und/oder physikalischer Gasphasenabscheidung, bevorzugt über Magnetron-Sputtering, erfolgt.

13. Verfahren gemäß einem der Ansprüche 6 bis 12, **dadurch gekennzeichnet, dass** in Schritt b) ein Teil der columnaren Schicht von der Fläche entfernt wird durch Ablation durch einen Laser, wobei der Laser
a) bevorzugt ein gepulster und/oder ungepulsten Laser, stärker bevorzugt ein gepulster Laser, besonders bevorzugt ein Femtosekundenlaser, Pikosekundenlaser, Nanosekundenlaser und/oder Mikrosekundenlaser, insbesondere Femtosekundenlaser und/oder Pikosekundenlaser, ist; und/oder
b) Licht einer Wellenlänge im UV-Bereich, VIS-Bereich und/oder IR-Bereich aussendet, bevorzugt Licht im VIS-Bereich; und/oder
c) mit einer Laserleistung von 1 mW bis 1 kW, bevorzugt 500 mW bis 100 W, besonders bevorzugt 1 W bis 50 W, betrieben wird; und/oder
d) mit einer Vorschubgeschwindigkeit von 0,1 mm/sek bis 10 m/sek, bevorzugt 1 mm/sek bis 1 m/sek, besonders bevorzugt 25 mm/sek bis 500 mm/sek, betrieben wird.

14. Verfahren gemäß einem der Ansprüche 6 bis 13, **dadurch gekennzeichnet, dass** in Schritt b) ein Teil der columnaren Schicht von der Fläche entfernt wird durch zumindest bereichsweises Bedecken der Fläche des Substrats mit einer Maske, bevorzugt einer Maske enthaltend ein anorganisches Metallsalz oder bestehend daraus, und Durchführung eines Ätzschrittes, wobei der Ätzschritt bevorzugt umfasst
a) Ätzen mit einem Ätzgas, das bevorzugt Fluor F₂ und/oder NF₃ enthält oder daraus besteht, wobei das Ätzgas optional ein Trägergas, bevorzugt Stickstoff und/oder Argon, enthält;
b) Ätzen bei einem Druck von 0,1 mbar bis 2 bar, bevorzugt 1 mbar bis 100 mbar, besonders bevorzugt 5 mbar bis 10 mbar; und/oder
c) Ätzen bei einer Temperatur von 20 bis 500 °C, bevorzugt 200 bis 400 °C, besonders bevorzugt 250 bis 350 °C; und/oder
d) Ätzen über einen Zeitraum von 0,1 bis 20 Minuten, bevorzugt 0,5 bis 10 Minuten, besonders bevorzugt 1 bis 5 Minuten; und/oder
e) Ätzen durch Plasmaaktivierung des Ätzgases, bevorzugt durch Mikrowellenplasma.

15. Verwendung der Lithium-Sekundärbatterie gemäß einem der Ansprüche 3 bis 5 als Energiequelle für ein Transportmittel, ein Gebäude und/oder ein Elektronikgerät.

## Claims

1. Anode for a lithium secondary battery, comprising a substrate having an extent over a defined geometric area, or consisting thereof, there being deposited over 45% to 70% of this area a columnar layer which comprises or consists of silicon and has a layer height of at least 1 µm, **characterized in that** the columnar layer forms a multiplicity of regions which are distributed evenly on the geometric area.

2. Anode according to claim 1, **characterized in that** the columnar layer substantially comprises or consists of amorphous silicon and/or crystalline silicon, optionally also lithium.

3. Lithium secondary battery comprising an anode according to one of claims 1 to 2.

4. Lithium secondary battery according to claim 3, **characterized in that** the lithium secondary battery is a lithium-ion secondary battery which preferably comprises a cathode which comprises or consists of a lithium metal oxide compound and/or lithium metal phosphate compound, more preferably a cathode which comprises or consists of LiFePO₄, LiCoO₂, LiNiO₂, LiNi₁₋ₓCoₓO₂ with x = 0-1, LiNi_{0.85}Co_{0.1}Al_{0.05}O₂, LiNi_{0.33}Co_{0.33}Mn_{0.33}O₂ and/or LiMn₂O₄.

5. Lithium secondary battery according to claim 3, **characterized in that** the lithium secondary battery is a lithium-sulfur battery which preferably comprises or consists of
a) the anode in the lithiated state; and/or
b) a cathode comprising or consisting of carbon, sulfur, a polysulfide and/or a lithium metal sulfide; and/or
c) an additive for the homogenized distribution of polysulfide within the cathode; and/or
d) a separator, preferably a separator comprising polypropylene; and/or
e) a liquid or solid electrolyte suitable for lithium ion transport, preferably an electrolyte comprising 50 vol% DME and/or 50 vol% DOL, where the electrolyte optionally comprises LiTFSI and/or LiNO₃, especially comprises 1 M LiTFSI and/or 0.25 M LiNO₃.

6. Method for producing an anode for a lithium secondary battery, comprising the steps of
a) depositing silicon on a substrate having an extent over a defined geometric area, wherein silicon is deposited on 45% to 70% of the area to form a columnar layer which comprises or consists of silicon and has a layer height of at least 1 µm; or
b) depositing silicon on a substrate having an extent over a defined geometric area, where silicon is deposited on more than 40% to 90% of the area to form a columnar layer which comprises or consists of silicon, and subsequently removing a part of the columnar layer from the area, so that the columnar layer remains only on 45% to 70% of the area and has a layer height of at least 1 µm,
**characterized in that** in step a) the columnar layer is deposited or in step b) a part of the columnar layer is removed in such a way that the columnar layer after step a) or step b) forms a multiplicity of regions which are distributed evenly on the geometric area of the substrate.

7. Method according to claim 6, **characterized in that** the columnar layers are deposited in step a) or removed in step b) in such a way that
a) 50% to 70%, more preferably 55% to 70%, of the area is covered by the columnar layers; and/or
b) the silicon loading on the entire area of the substrate is from 0.25 to 10 mg Si per cm², preferably 0.5 to 4 mg Si per cm², more preferably 0.6 to 2.5 mg Si per cm².

8. Method according to either of claims 6 and 7, **characterized in that** the regions of the columnar layer
a) have a height of ≥ 2 µm, preferably ≥ 3 µm, more preferably ≥ 4 µm, very preferably ≥ 4 µm to ≥ 100 µm, more particularly ≥ 4 to 95 µm; and/or
b) in a direction lateral to the area, optionally also in a direction perpendicular to this direction, have a width of ≥ 0.2 µm, preferably 1 to 1000 µm, more preferably 5 to 200 µm, more particularly 10 µm to 100 µm; and/or
c) each have a distance from one another of ≥ 2 µm, preferably ≥ 3 µm, more preferably ≥ 4 µm, more particularly 5 µm to 150 µm; and/or
d) have individual lobes of silicon, where at least one individual lobe, preferably all individual lobes in each case, in a direction lateral to the area, optionally also in a direction perpendicular to this direction, have a width of ≥ 0.2 µm, preferably 0.3 to 90 µm, more preferably 0.5 to 9 µm, very preferably 1 µm to 4 µm; and/or
e) are formed as linear layers on the area, where the linear layers are preferably formed at least regionally as straight, wavy and/or circular lines, more preferably are formed as parallel straight lines, parallel wavy lines and/or concentric circular lines, more particularly are formed as a grid of parallel straight lines and/or parallel wavy lines.

9. Method according to any of claims 6 to 8, **characterized in that** the substrate comprises or consists of an electrically conductive material, preferably comprises or consists of a metal, a metal alloy and/or carbon, preferably comprises or consists of copper, stainless steel, nickel, aluminium, titanium and/or graphite.

10. Method according to any of claims 6 to 9, **characterized in that** the substrate
a) is configured as a continuous areal substrate; or
b) is configured as an areal substrate with recesses, preferably going-through recesses; or
c) is configured as an areal lattice;
where the substrate is optionally applied on an electrically insulating substrate, preferably an electrically insulating film.

11. Method according to any of claims 6 to 10, **characterized in that** in step a), before the deposition,
a) the area of the substrate is covered at least regionally with a mask; and/or
b) the substrate is provided with at least one going-through recess, preferably a linear and/or circular going-through recess; and/or
c) nucleation seeds at which deposition is favoured are deposited on the substrate.

12. Method according to any of claims 6 to 11, **characterized in that** the columnar layer is deposited with chemical vapour deposition and/or physical vapour deposition, preferably via magnetron sputtering.

13. Method according to any of claims 6 to 12, **characterized in that** in step b) a part of the columnar layer is removed from the area by ablation by a laser, wherein the laser
a) is preferably a pulsed and/or unpulsed laser, more preferably a pulsed laser, very preferably a femtosecond laser, picosecond laser, nanosecond layer and/or microsecond laser, more particularly femtosecond laser and/or picosecond laser; and/or
b) emits light with a wavelength in the UV range, VIS range and/or IR range, preferably light in the VIS range; and/or
c) is operated with a laser power of 1 mW to 1 kW, preferably 500 mW to 100 W, more preferably 1 W to 50 W; and/or
d) is operated with an advancement speed of 0.1 mm/sec to 10 m/sec, preferably 1 mm/sec to 1 m/sec, more preferably 25 mm/sec to 500 mm/sec.

14. Method according to any of claims 6 to 13, **characterized in that** in step b) a part of the columnar layer is removed from the area by at least regionally covering the area of a substrate with a mask, preferably a mask comprising an inorganic metal salt or consisting thereof, and carrying out an etching step, where the etching step preferably comprises
a) etching with an etching gas which preferably comprises or consists of fluorine F₂ and/or NF₃, wherein the etching gas optionally comprises a carrier gas, preferably nitrogen and/or argon;
b) etching at a pressure of 0.1 mbar to 2 bar, preferably 1 mbar to 100 mbar, more preferably 5 mbar to 10 mbar; and/or
c) etching at a temperature of 20 to 500°C, preferably 200 to 400°C, more preferably 250 to 350°C; and/or
d) etching over a period of 0.1 to 20 minutes, preferably 0.5 to 10 minutes, more preferably 1 to 5 minutes; and/or
e) etching by plasma-activating the etching gas, preferably by microwave plasma.

15. Use of the lithium secondary battery according to any of claims 3 to 5 as an energy source for a means of transport, a building and/or an electronic device.

## Revendications

1. Anode pour une batterie secondaire au lithium, contenant un substrat ayant une extension sur une certaine surface géométrique, ou en étant constituée, une couche colonnaire, qui contient du silicium ou en est constituée et qui présente une hauteur de couche d'au moins 1 µm, étant déposée sur 45 % à 70 % de cette surface, **caractérisée en ce que** la couche colonnaire forme une multitude de zones qui sont réparties uniformément sur la surface géométrique.

2. Anode selon la revendication 1, **caractérisée en ce que** la couche colonnaire contient pour l'essentiel du silicium amorphe et/ou du silicium cristallin, optionnellement aussi du lithium, ou en est constituée.

3. Batterie secondaire au lithium contenant une anode selon l'une des revendications 1 à 2.

4. Batterie secondaire au lithium selon la revendication 3, **caractérisée en ce que** la batterie secondaire au lithium est une batterie secondaire à ion lithium, qui de préférence contient une cathode qui contient un composé d'oxyde de lithium métallique et/ou un composé de phosphate de lithium métallique ou en est constituée, d'une manière particulièrement préférée une cathode qui contient du LiFePO₄, du LiCoO₂, du LiNiO₂, du LiNi₁₋ₓCoₓO₂ avec x = 0-1, du LiNi_{0,85}Co_{0,1}Al_{0,05}O₂, du LiNi_{0,33}Co_{0,33}Mn_{0,33}O₂ et/ou du LiMn₂O₄, ou en est constituée.

5. Batterie secondaire au lithium selon la revendication 3, **caractérisée en ce que** la batterie secondaire au lithium est une batterie au lithium-soufre, qui de préférence contient
a) l'anode à l'état lithié ; et/ou
b) une cathode contenant du carbone, du soufre, un polysulfure et/ou un sulfure de lithium métallique, ou en est constituée ; et/ou
c) un additif pour la répartition homogénéisée du polysulfure à l'intérieur de la cathode ; et/ou
d) un séparateur, de préférence un séparateur contenant du polypropylène ; et/ou
e) un électrolyte liquide ou solide convenant au transport d'ions lithium, de préférence un électrolyte contenant 50 % en volume de DME et/ou 50 % en volume de DOL, l'électrolyte contenant optionnellement du LiTFSI et/ou du LiNO₃, en particulier du LiTFSI 1 M et/ou du LiNO₃ 0,25 M ;
ou en est constituée.

6. Procédé pour la fabrication d'une anode destinée à une batterie secondaire au lithium, comprenant les étapes suivantes :
a) dépôt de silicium sur un substrat présentant une extension sur une certaine surface géométrique, le silicium étant déposé sur 45 % à 70 % de la surface, avec création d'une couche colonnaire qui contient du silicium ou en est constituée et qui présente une hauteur de couche d'au moins 1 µm ; ou
b) dépôt de silicium sur un substrat ayant une extension sur une certaine surface géométrique, le silicium étant déposé sur plus de 40 % et jusqu'à 90 % de la surface, avec formation d'une couche colonnaire qui contient du silicium ou en est constituée, puis enlèvement d'une partie de la couche colonnaire se trouvant sur la surface considérée, de façon que la couche colonnaire ne reste que sur 45 % à 70 % de la surface et présente une hauteur de couche d'au moins 1 µm,
**caractérisé en ce que** la couche colonnaire est déposée dans l'étape a), ou qu'une partie de la couche colonnaire est enlevée dans l'étape b), de telle sorte que la couche colonnaire forme après l'étape a) ou après l'étape b) une multitude de zones, qui sont réparties uniformément sur la surface géométrique du substrat.

7. Procédé selon la revendication 6, **caractérisé en ce que** les couches colonnaires sont déposées dans l'étape a) ou enlevées dans l'étape b) de telle sorte que
a) 50 à 70 %, d'une manière particulièrement préférée 55 à 70 % de la surface soient recouverts des couches colonnaires ; et/ou
b) que la charge de silicium sur la surface totale du substrat soit de 0,25 à 10 mg Si par cm², de préférence de 0,5 à 4 mg Si par cm², d'une manière particulièrement préférée de 0,6 à 2,5 mg Si par cm².

8. Procédé selon l'une des revendications 6 ou 7, **caractérisé en ce que** les zones de la couche colonnaire
a) présentent une hauteur ≥ 2 µm, de préférence ≥ 3 µm, d'une manière particulièrement préférée ≥ 4 µm, d'une manière tout particulièrement préférée ≥ 4 µm jusqu'à 100 µm, en particulier ≥ 4 jusqu'à 95 µm ; et/ou
b) présentent dans une direction latérale par rapport à la surface, optionnellement en outre dans une direction perpendiculaire à cette direction, une largeur ≥ 0,2 µm, de préférence de 1 à 1000 µm, d'une manière particulièrement préférée de 5 à 200 µm, en particulier de 10 µm à 100 µm ; et/ou
c) sont écartées l'une de l'autre d'une distance ≥ 2 µm, de préférence ≥ 3 µm, d'une manière particulièrement préférée ≥ 4 µm, en particulier de 5 µm à 150 µm ; et/ou
d) présentent des lobes individuels en silicium, au moins un lobe individuel, de préférence chacun de la totalité des lobes individuels, présentant dans une direction latérale par rapport à la surface, optionnellement en outre dans une direction perpendiculaire à cette direction, une largeur ≥ 0,2 µm, de préférence de 0,3 à 90 µm, plus préférentiellement de 0,5 à 9 µm, d'une manière particulièrement préférée de 1 µm à 4 µm ; et/ou
e) sont formées sous forme de couches linéaires sur la surface, les couches linéaires étant de préférence au moins par zones formées de lignes droites, ondulées et/ou circulaires, d'une manière particulièrement préférée sous forme de lignes droites parallèles, de lignes ondulées parallèles et/ou de lignes circulaires concentriques, en particulier sous forme d'un réseau de lignes droites parallèles et/ou de lignes ondulées parallèles.

9. Procédé selon l'une des revendications 6 à 8, **caractérisé en ce que** le substrat contient un matériau conducteur de l'électricité ou en est constitué, de préférence contient un métal, un alliage métallique et/ou du carbone, ou en est constitué, de préférence contient du cuivre, de l'acier inoxydable, du nickel, de l'aluminium, du titane et/ou du graphite, ou en est constitué.

10. Procédé selon l'une des revendications 6 à 9, **caractérisé en ce que** le substrat
a) est configuré comme un substrat bidimensionnel continu ; ou
b) est configuré comme un substrat bidimensionnel comportant des évidements, de préférence des évidements continus ; ou
c) est configuré comme une grille bidimensionnelle ;
le substrat étant optionnellement appliqué sur un substrat isolant électrique, de préférence sur une feuille isolante électrique.

11. Procédé selon l'une des revendications 6 à 10, **caractérisé en ce que** dans l'étape a), avant le dépôt,
a) on recouvre la surface du substrat au moins par zones à l'aide d'un masque ; et/ou
b) on aménage dans le substrat au moins un évidement continu, de préférence un évidement continu linéaire et/ou circulaire ; et/ou
c) on dépose sur le substrat des germes de nucléation au niveau desquels le dépôt est favorisé.

12. Procédé selon l'une des revendications 6 à 11, **caractérisé en ce que** le dépôt de la couche colonnaire a lieu par dépôt chimique en phase gazeuse et/ou par dépôt physique en phase gazeuse, de préférence par pulvérisation cathodique magnétron.

13. Procédé selon l'une des revendications 6 à 12, **caractérisé en ce que** dans l'étape b) une partie de la couche colonnaire est enlevée de la surface par ablation par un laser, le laser
a) étant de préférence un laser pulsé et/ou non pulsé, plus préférentiellement un laser pulsé, d'une manière particulièrement préférée un laser femtoseconde, un laser picoseconde, un laser nanoseconde et/ou un laser microseconde, en particulier un laser femtoseconde et/ou un laser picoseconde ; et/ou
b) émettant une lumière ayant une longueur d'onde dans la gamme des UV, dans la gamme visible et/ou dans la gamme des IR, de préférence une lumière dans la gamme visible ; et/ou
c) étant utilisé avec une puissance laser de 1 mW à 1 kW, de préférence de 500 mW à 100 W, d'une manière particulièrement préférée de 1 W à 50 W ; et/ou
d) étant utilisé avec une vitesse d'avance de 0,1 mm/s à 10 m/s, de préférence de 1 mm/s à 1 m/s, d'une manière particulièrement préférée de 25 mm/s à 500 mm/s.

14. Procédé selon l'une des revendications 6 à 13, **caractérisé en ce que** dans l'étape b) une partie de la couche colonnaire est enlevée de la surface et, par recouvrement au moins partiel de la surface du substrat avec un masque, de préférence avec un masque contenant un sel métallique inorganique ou en étant constitué, et mise en oeuvre d'une étape de gravure, l'étape de gravure comprenant de préférence :
a) la gravure à l'aide d'un gaz de gravure qui de préférence contient du fluor F₂ et/ou du NF₃ ou en est constitué, le gaz de gravure contenant en option un gaz porteur, de préférence l'azote et/ou l'argon ;
b) la gravure sous une pression de 0,1 mbar à 2 bar, de préférence de 1 mbar à 100 mbar, d'une manière particulièrement préférée de 5 mbar à 10 mbar ; et/ou
c) la gravure à une température de 20 à 500 °C, de préférence de 200 à 400 °C, d'une manière particulièrement préférée de 25 à 350 °C ; et/ou
d) la gravure sur une durée de 0,1 à 20 minutes, de préférence de 0,5 à 10 minutes, d'une manière particulièrement préférée de 1 à 5 minutes ; et/ou
e) la gravure par activation plasma du gaz de gravure, de préférence par plasma micro-onde.

15. Utilisation de la batterie secondaire au lithium selon l'une des revendications 3 à 5 en tant que source d'énergie pour un moyen de transport, un bâtiment et/ou un appareil électronique.
